# EUROPEAN PATENT APPLICATION

(11) **EP 4 651 588 A1**
(43) Date of publication of application: **19.11.2025**
(21) Application number: 23916063.3
(22) Date of filing: 13.01.2023
(51) Int. Cl.: H04W 68/00, H04W 48/10, H04W 72/0457, H04W 92/14

(54) **NETWORK NODE, USER EQUIPMENT, AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); HATANAKA, Yoshitaka, Tokyo 100-6150 (JP); SAWADA, Masahiro, Tokyo 100-6150 (JP)
(74) Representative: Hoffmann Eitle
(86) International application number: PCT/JP2023/000889
(87) International publication number: WO 2024/150443

(57) **Abstract**

A network node includes: a transmission unit configured to transmit a configuration request including a paging deactivation indication to an AMF (Access and Mobility Management Function); and a reception unit configured to receive a response to the configuration request from the AMF. The transmission unit transmits broadcast information including a paging deactivation indication to a terminal.

## Description

### TECHNICAL FIELD

The present invention relates to a network node, a terminal, and a communication method in a communication system.

### BACKGROUND ART

In 3GPP (registered trademark) (3rd Generation Partnership Project), in order to realize even greater system capacity, even faster data transmission speeds, even lower latency in a wireless communication section, etc., a wireless communication method called "5G" or "NR (New Radio)" has been discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., Non-Patent Document 1).

### CITATION LIST

### Non-Patent Document

Non-Patent Document 1: 3GPP TS 23.501 V18.0.0 (2022-12)
Non-Patent Document 2: 3GPP TR 23.700-53 V18.0.0 (2022-12)
Non-Patent Document 3: 3GPP TS 38.413 V17.3.0 (2022-12)
Non-Patent Document 4: 3GPP TS 33.501 V18.0.0 (2022-12)
Non-Patent Document 5: 3GPP TS 38.304 V17.2.0 (2022-12)
Non-Patent Document 6: 3GPP TS 23.502 V18.0.0 (2022-12)
Non-Patent Document 7: 3GPP TS 24.501 V18.1.0 (2022-12)
Non-Patent Document 8: 3GPP TS 29.244 V18.0.1 (2022-12)
Non-Patent Document 9: 3GPP TS 24.193 V18.0.0 (2022-12)
Non-Patent Document 10: 3GPP TS 38.300 V17.2.0 (2022-09)

### SUMMARY OF THE INVENTION

### TECHNICAL PROBLEM

When transitioning to 5G, DC (Dual Connectivity) is adopted in order to stabilize the initial coverage at the time of wireless system deployment. However, implementation of DC under the multi-vendor environment has been difficult. Accordingly, when transitioning to the next generation wireless system, a method is desired that can achieve stabilization of the initial coverage at the time of deployment without using DC. Here, in a case of considering a method of using a plurality of master nodes, if one of the master nodes uses a significantly high frequency, it is not efficient nor appropriate to use the master node for paging. In this case, paging is required to be deactivated with respect to the master node.

The present invention has been made in view of the above points, and it is an object of the present invention to deactivate paging in a specific RAN (Radio Access Network) node.

### SOLUTION TO PROBLEM

According to the disclosed technique, a network node is provided. The network node includes: a transmission unit configured to transmit a configuration request including a paging deactivation indication to an AMF (Access and Mobility Management Function); and a reception unit configured to receive a response to the configuration request from the AMF. The transmission unit transmits broadcast information including a paging deactivation indication to a terminal.

### ADVANTAGEOUS EFFECTS OF INVENTION

According to the disclosed technique, paging can be deactivated in a specific RAN (Radio Access Network) node.

### BRIEF DESCRIPTION OF DRAWINGS

[Fig. 1] is a drawing for describing an example of a communication system.
[Fig. 2] is a drawing for describing an example of a communication system under a roaming environment.
[Fig. 3] is a drawing for describing an example of a network in an embodiment of the present invention.
[Fig. 4] is a sequence diagram for describing an example of initial configuration and configuration modification in an embodiment of the present invention.
[Fig. 5] is a sequence diagram for describing an example of cell selection in an embodiment of the present invention.
[Fig. 6] is a sequence diagram for describing an example of a registration procedure in an embodiment of the present invention.
[Fig. 7] is a sequence diagram for describing an example (1) of a PDU session establishment procedure in an embodiment of the present invention.
[Fig. 8] is a sequence diagram for describing an example (2) of a PDU session establishment procedure in an embodiment of the present invention.
[Fig. 9] is a sequence diagram for describing an example (3) of a PDU session establishment procedure in an embodiment of the present invention.
[Fig. 10] is a sequence diagram for describing an example of PDU session deactivation in an embodiment of the present invention.
[Fig. 11] is a sequence diagram for describing an example of a terminal initiated service request procedure in an embodiment of the present invention.
[Fig. 12] is a sequence diagram for describing an example of a network initiated service request procedure in an embodiment of the present invention.
[Fig. 13] is drawing illustrating an example of a functional structure of a base station 10 and a network node 30 in an embodiment of the present invention.
[Fig. 14] is a drawing illustrating an example of a functional configuration of a terminal 20 in an embodiment of the present invention.
[Fig. 15] is a drawing illustrating an example of a hardware structure of the base station 10 and the terminal 20 in an embodiment of the present invention.
[Fig. 16] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Further, in an embodiment of the present invention, the expression, radio parameters are "configured" may mean that a predetermined value is pre-configured, or may mean that a radio parameter indicated by a network node 30 or a terminal 20 is configured.

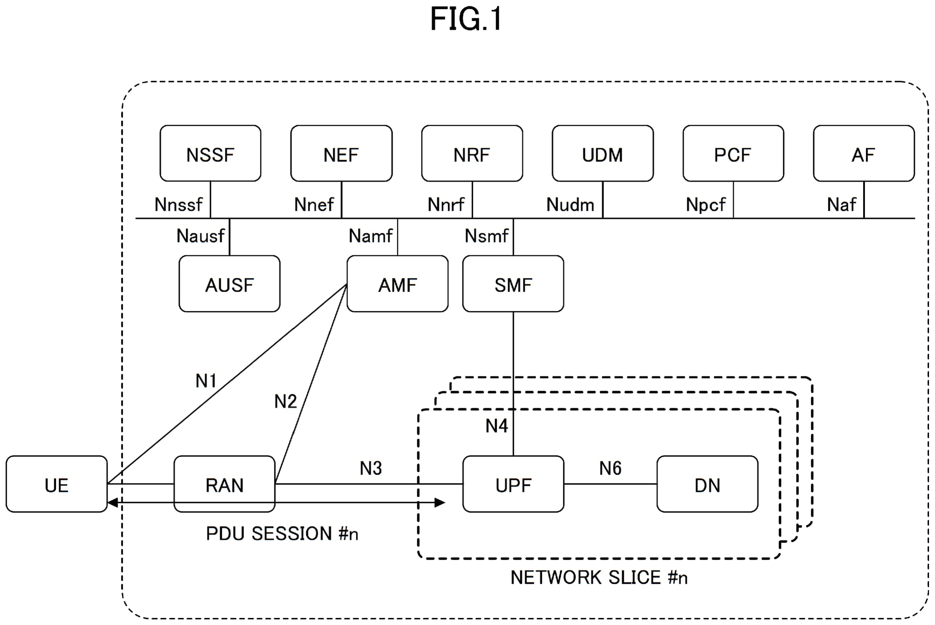

Fig. 1 is a drawing illustrating an example of a communication system. As illustrated in Fig. 1, the communication system includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN (Radio Access Network) is a network node 30 with wireless access functions, may include a base station 10, and is connected to UE, AMF (Access and Mobility Management Function) and UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with DN (Data Network), and has functions such as a PDU (Protocol Data Unit) session point to an external unit, routing and forwarding packets, and QoS (Quality of Service) handling of the user plane. UPF and DN are included in a network slice. In a wireless communication network in an embodiment of the present invention, multiple network slices are included.

AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, Internet Protocol (IP) address assignment and management of UE, DHCP (Dynamic Host Configuration Protocol) function, ARP (Address Resolution Protocol) proxy, and roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. PCF is a network node 30 having a function of performing policy control of the network. AF is a network node 30 having a function of controlling an application server. NRF is a network node 30 having a function of discovering NF instances which provide services. UDM is a network node 30 that manages subscriber data and authentication data. UDM is connected to UDR (User Data Repository) that stores the above-described data;

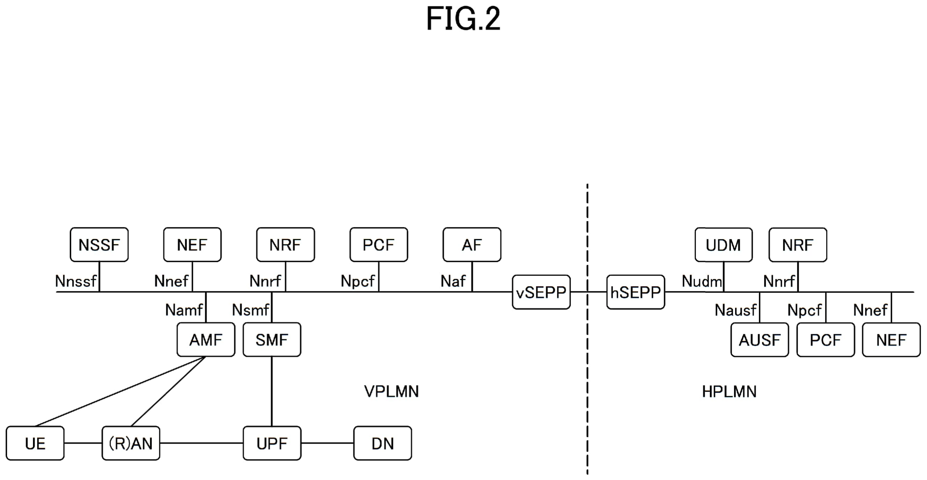

Fig. 2 is a drawing illustrating an example of a communication system under a roaming environment. As illustrated in Fig. 2, the network includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN is a network node 30 having a wireless access function, and is connected to UE, AMF and UPF. AMF is a network node 30 having functions of, for example, terminating the RAN interface, terminating NAS, managing registration, managing connection, managing reachability, and managing mobility. UPF is a network node 30 having functions of, for example, PDU session point to an external unit mutually connected to DN, routing and forwarding of packets, and QoS handling of the user plane. UPF and DN are included in a network slice. In a wireless communication network in an embodiment of the present invention, multiple network slices are included.

AMF is connected to UE, RAN, SMF, NSSF, NEF, NRF, UDM, AUSF, PCF, AF, and SEPP (Security Edge Protection Proxy). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

SMF is a network node 30 having functions such as session management, IP address assignment and management of UE, a DHCP function, an ARP proxy, and a roaming function. NEF is a network node 30 having a function of indicating capabilities and events to other NFs. NSSF is a network node 30 having functions of, for example, selecting the network slice to which the UE is to be connected, determining NSSAI to be allowed, determining NSSAI to be configured, and determining AMF set to which the UE is to be connected. PCF is a network node 30 having a function of performing policy control of the network. AF is a network node 30 having a function of controlling an application server. NRF is a network node 30 having a function of discovering NF instances which provide services. SEPP is a non-transparent proxy and filters control plane messages between PLMNs (Public Land Mobile Networks). vSEPP shown in Fig. 2 is a SEPP in a visited network, and hSEPP is a SEPP in a home network.

As shown in Fig. 2, the UE is in a roaming environment connected to RAN and AMF in VPLMN (Visited PLMN). VPLMN and HPLMN (Home PLMN) are connected via vSEPP and hSEPP. The UE can communicate with the UDM of HPLMN via, for example. The AMF of VPLMN.

Here, when transitioning to 5G, DC (Dual Connectivity) is adopted in order to stabilize the initial coverage at the time of wireless system deployment. However, implementation of DC under the multi-vendor environment has been difficult. Accordingly, when transitioning to the next generation wireless system, a method is desired that can achieve stabilization of the initial coverage at the time of deployment without using DC.

It is to be noted that the dual registration has been specified in the technical specification as a 5G transition method. The purpose of deployment of the dual registration has been resolving the mutual operations between: EPC and E-UTRA; and 5GC and NR, in a case where there is no N26 that is an interface between AMF and MME (refer to Non-Patent Document 1). There has been no sufficient solution with respect to a phenomenon in which the registration is performed to both EPC and 5GC via the same E-UTRA cell when 5GC and E-UTRA are configured. Therefore, in a case where the next generation core network is an enhancement of 5GC, the dual registration that has been specified in the technical specification for the 5G transition method cannot be reused.

In other words, in a case where the next generation core network is expected to be an enhancement of 5GC, although a method of achieving the stabilization of initial coverage at the time of the next generation wireless system deployment without using DC is desired, currently, such a method does not exist.

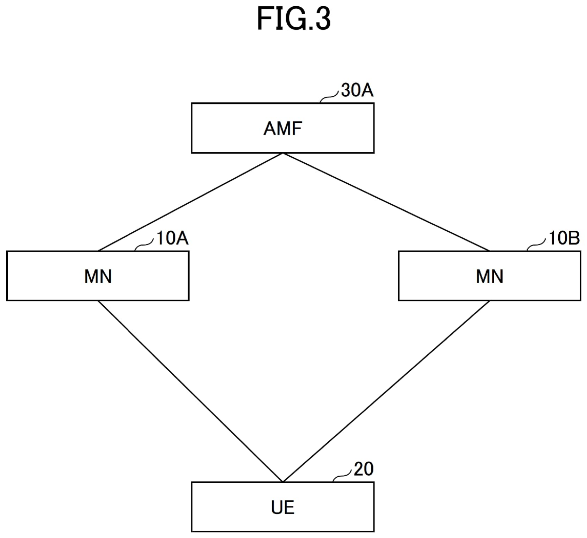

Accordingly, in a case where a terminal is registered or connected to a network, the terminal may have two MNs (Master Nodes). Fig. 3 is a drawing for describing an example of a network in an embodiment of the present invention. A new configuration in which there are two RRC (Radio Resource Control) states, two CM (Connection management) states, and one registration state (RM (Registration management) state) is deployed for a terminal. QoS flow(s) may be distributed or split between two MNs. In addition, the cells used for the standby and the paging may berestricted. As illustrated in Fig. 3, the two MNs may recognize each other through AMF, and an appropriate destination MN may be selected at the time of handover.

It is to be noted that states of RM-DEREGISTERED and RM-REGISTERED are defined in the conventional technical specification related to registration. Each of the terminal and the AMF has an RM state. The transition of the RM state is based on NAS signals. RM states independent from each other are defined for the corresponding accesses with respect to one terminal. An access is, for example, a 3GPP access, a non-3GPP access, or the like.

It is to be noted that states of CM-IDLE and CM-CONNECTED are defined in the conventional technical specification related to connection. Each of the terminal and the AMF has a CM state. The transition of the CM state of the terminal is based on RRC signals, and the transition of the CM state of the AMF is based on N2 signals used in the interface to RAN. CM states independent from each other are defined for the corresponding accesses with respect to one terminal. An access is, for example, a 3GPP access, a non-3GPP access, or the like.

It is to be noted that, in the conventional technical specification, ATSSS (Access Traffic Steering, Switching, Splitting) takes care of QoS flow distribution and splitting between a 3GPP access and a non-3GPP access.

For example, the AMF may control one RM state and two CM states with respect to the 3GPP access by a terminal. The AMF may store an MN identifier, a Global RAN Node ID (refer to Non-Patent Document 1), a RAN UE NGAP (NG Application Protocol) ID (refer to Non-Patent Document 3), and an AMF UE NGAP ID (refer to Non-Patent Document 3), not in each access level terminal context, but in each of the two newly deployed MN level terminal contexts. The AMF may use the MN level terminal contexts for the message routing between the RAN and the SMF, for differentiation of K_{gNB} (refer to Non-Patent Document 4), for deriving a CM state of each connection, and for deriving the UE-CM state indicating the terminal reachability. The terminal may control one RM state and two CM states with respect to the 3GPP access. It is to be noted that the RAN UE NGAP ID is an identifier for identifying UE on the NG interface in the RAN node, and the AMF UE NGAP ID is an identifier for identifying UE on the NG interface in the AMF.

For example, the SMF may assign QoS flows of the PDU session between a plurality of MNs. The SMF may indicate a policy to the RAN and, based on the RAN determination, may assign QoS flows of the PDU session between a plurality of MNs. The SMF may request the terminal to transmit a PDU session modification request from another MN with respect to the existing PDU session of the 3GPP access. The RAN may determine the QoS flow distribution of the PDU session and the QoS flow splitting, based on the policy indicated by the SMF. The terminal may transmit a PDU session modification request from the second MN to the existing PDU session of the 3GPP access, based on an indication indicated by the SMF.

For example, the RAN may configure the paging activation or the paging deactivation. The paging deactivation indicates a RAN node that does not perform paging. In a case of the paging deactivation, the RAN may indicate such information to the terminal by using broadcast information and may indicate the information to the AMF by using a terminal independent N2 message. The AMF is not required to transmit paging to the paging deactivated RAN via N2. The terminal is not required to use a cell of the paging deactivated RAN as a candidate of cell selection and cell reselection. In a case where the terminal camps on a cell of the paging activated RAN as usual, the terminal may further add a cell of the paging deactivated RAN to the candidates for cell selection or cell reselection.

For example, in a case where there is another RAN in the surrounding area, a RAT (Radio access technology) of the another RAN being different from that of the "buddy RAN node" that is the other MN in the dual MN configuration, the RAN may prioritize that RAN to be selected as a handover destination, based on a configuration. Alternatively, in a case where there is another RAN in the surrounding area, a RAT of the another RAN being the same as that of the buddy RAN node, that RAN may be prioritized to be selected as a handover destination. The RAN may select the above-described handover destination, based on the information related to the buddy RAN node indicated by the AMF. The AMF may indicate the information related to the buddy node to the RAN. The AMF may indicate the information related to the buddy node to the RAN in a case where the transition to CM-CONNECTED is performed with respect to the two MNs.

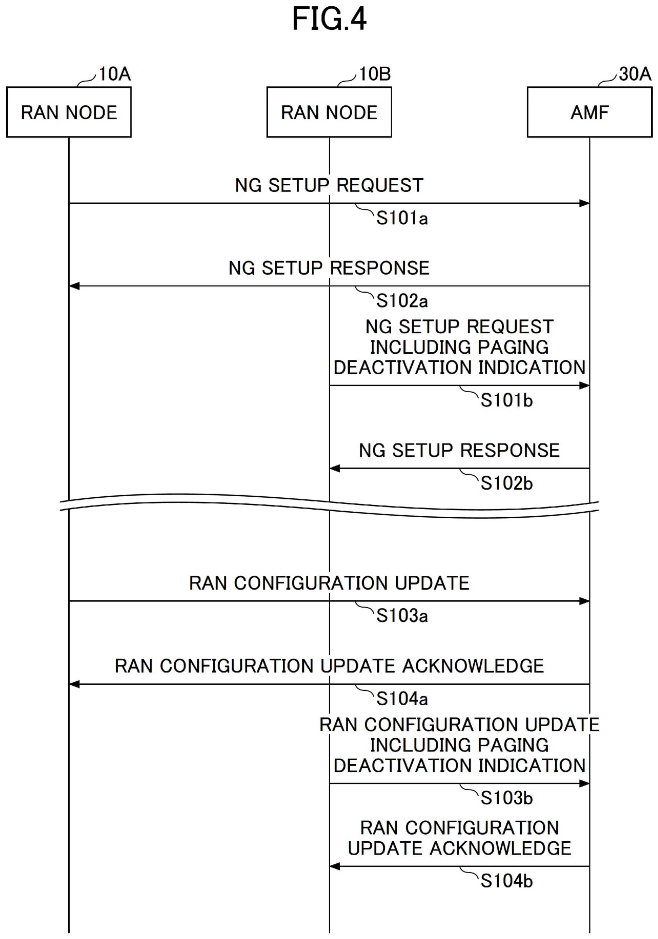

Fig. 4 is a sequence diagram for describing an example of initial configuration and configuration modification in an embodiment of the present invention. In step S101a, the RAN node 10A transmits an NG SETUP request (NG SETUP REQUEST) to the AMF 30A (refer to Non-Patent Document 3). In subsequent step S102a, the AMF 30A transmits an NG SETUP response (NG SETUP RESPONSE) to the RAN node 10A. Here, the RAN node 10A is an example of a paging activated RAN node.

On the other hand, in step S101b, the RAN node 10B transmits an NG SETUP request including a paging deactivation indication in which a dummy value is configured in the supported TA list (Supported Tracking Area list) (refer to Non-Patent Document 3) to the AMF 30A. In subsequent step S102a, the AMF 30A transmits an NG SETUP response to the RAN node 10B. Here, the RAN node 10B is an example of a paging deactivated RAN node, and a paging deactivation indication can be configured in a case where a RAN is a next generation system. Hereinafter, the AMF 30A does not use the RAN node 10B for paging.

In step S103a, the RAN node 10A transmits a RAN configuration update (RAN CONFIGURATION UPDATE) to the AMF 30A. In subsequent step S104a, the AMF 30A transmits a RAN configuration update acknowledge (RAN CONFIGURATION UPDATE ACKNOWLEDGE) to the RAN node 10A.

On the other hand, in step S103b, the RAN node 10B transmits a RAN configuration update including a paging deactivation indication to the AMF 30A. In subsequent step S104b, the AMF 30A transmits a RAN configuration update acknowledge to the RAN node 10B. Hereinafter, the AMF 30A does not use the RAN node 10B for paging.

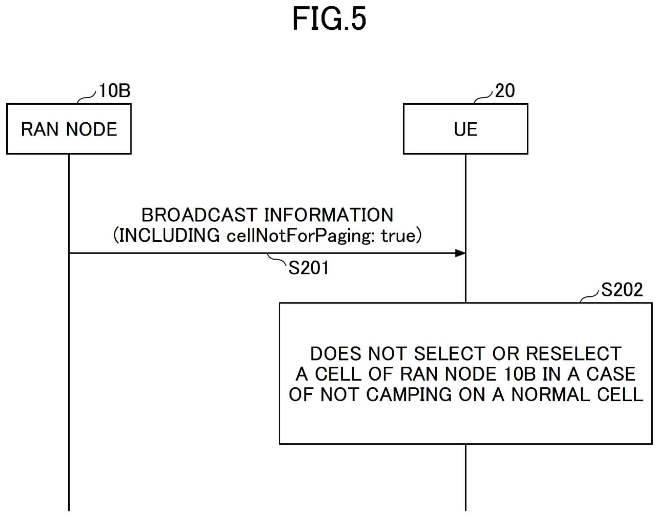

Fig. 5 is a sequence diagram for describing an example of cell selection in an embodiment of the present invention. In step S201, the RAN node 10B transmits broadcast information including an information element cellNotForPaging being true indicating the paging deactivation (refer to Non-Patent Document 5) to the UE 20. In subsequent step S202, the UE 20 does not use a cell of the RAN node 10B as a candidate for cell selection or cell reselection in a case where the UE 20 is not camping on another normal cell.

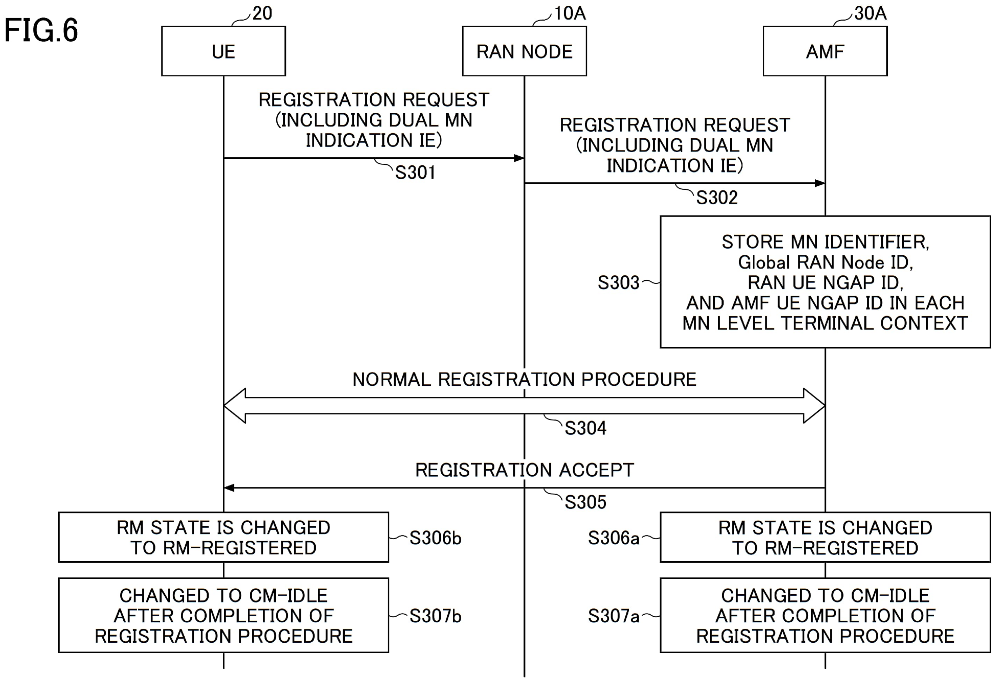

Fig. 6 is a sequence diagram for describing an example of a registration procedure in an embodiment of the present invention. In step S301 and step S302, the UE 20 transmits a registration request message including a new dual MN indication IE (Information Element) to the AMF 30A via NR and NG-RAN or via the next generation radio and the next generation RAN. It is to be noted that the RAN node corresponding to the RAT and RAN used in step S301 is hereinafter referred to as a RAN node 10A. With respect to the UE 20, a newly defined UE-CM state is UE-CM-CONNECTED. The UE-CM state is UE-CM-CONNECTED in a case where there is at least one CM-CONNECTED, and is UE-CM-IDLE in a case where there is no CM-CONNECTED.

In subsequent step S303, the AMF 30A stores an MN identifier corresponding to the RAN node 10A, a Global RAN Node ID corresponding to the RAN node 10A, a RAN UE NGAP ID corresponding to the UE 20, and an AMF UE NGAP ID corresponding to the UE 20 in each MN level terminal context. The AMF 30A stores an MN identifier being equal to MN#1, a Global RAN Node ID of the RAN node 10A that has already been obtained in the NG SETUP procedure, a RAN UE NGAP ID that has been obtained from the RAN node 10A, and an AMF UE NGAP ID that has already been assigned, or that will be assigned later, by the AMF 30A. With respect to the AMF 30A, a newly defined UE-CM state is UE-CM-CONNECTED.

It is to be noted that ULI (User Location Information) indicating the user location information may be included in each MN level terminal context. It is to be noted that the AMF 30A stores a set of a RAN UE NGAP ID, an AMF UE NGAP ID, and ULI in each access level terminal context according to the current technical specification (refer to Non-Patent Document 6).

In subsequent step S304, the AMF 30A, the UE 20, and the RAN node 10A perform a normal registration procedure. In subsequent step S305, the AMF 30A transmits a registration accept to the UE 20. In subsequent step S306a, the AMF 30A changes the RM state to RM-REGISTERED. In step S307a, the AMF 30A changes the CM state to CM-IDLE after the completion of the registration procedure. In other words, the AMF 30A changes the UE-CM state to UE-CM-IDLE.

In step S306b, the UE 20 that has received the registration accept changes the RM state to RM-REGISTERED. In step S307b, the UE 20 changes the CM state to CM-IDLE after the completion of the registration procedure. In other words, the UE 20 changes the UE-CM state to UE-CM-IDLE.

It is to be noted that the UE 20 may use appropriate RAT and RAN that are available regardless of the RAN node 10A that is used this time in a case of transmitting a registration request next time.

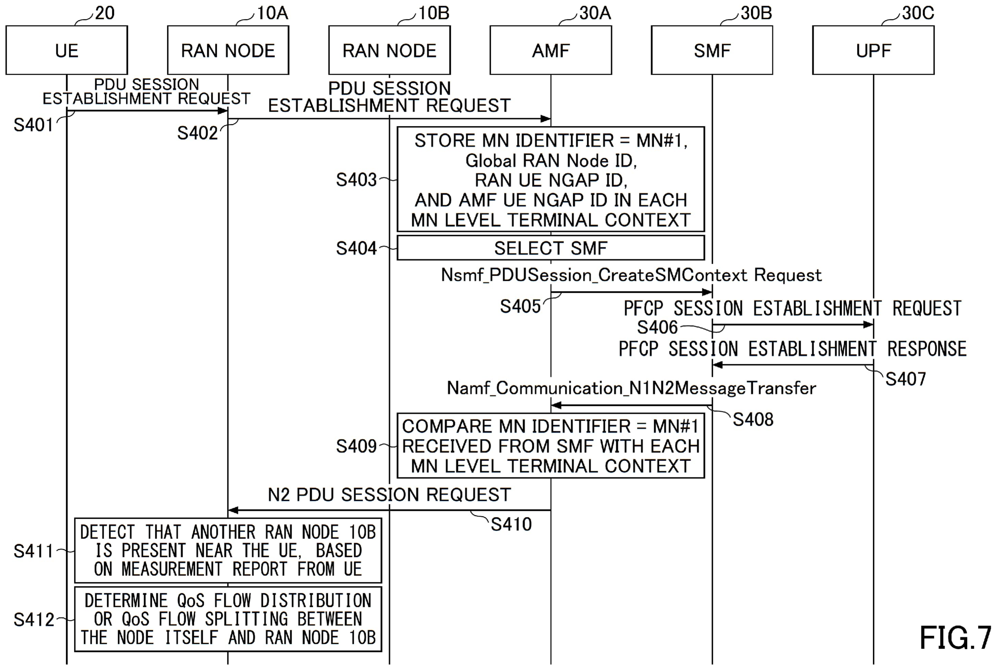

Fig. 7 is a sequence diagram for describing an example (1) of a PDU session establishment procedure in an embodiment of the present invention. In step S401 and step S402, the UE 20 transmits a PDU session establishment request to the AMF 30A via NR and NG-RAN or via the next generation radio and the next generation RAN (refer to Non-Patent Document 6). The PDU session establishment request includes a 5GSM (5GS Session Management) capability IE (refer to Non-Patent Document 7). New information indicating "QoS flow splitting according to RAN" is configured in the ATSSS-ST bit of the 5GSM capability IE. "MA PDU Request" is configured to Request Type and "3GPP multi-access connectivity" is configured to Request Sub-type in the UL NAS Transport that carries the PDU session establishment request (refer to Non-Patent Document 6) . It is to be noted that the RAN node corresponding to the RAT and RAN used in step S401 is hereinafter referred to as a RAN node 10A.

In subsequent step S403, the AMF 30A stores an MN identifier being equal to MN#1, a Global RAN Node ID of the RAN node 10A that has already been obtained in the NG SETUP procedure, a RAN UE NGAP ID that is obtained from the RAN node 10A, and an AMF UE NGAP ID that has already been assigned, or that will be assigned later, by the AMF 30A in each MN level terminal context.

In subsequent step S404, the AMF 30A selects the SMF 30B (refer to Non-Patent Document 6). In subsequent step S405, the AMF 30A transmits Nsmf_PDUSession_CreateSMContext Request including the PDU session establishment request (refer to Non-Patent Document 6) to the SMF 30B. The Nsmf_PDUSession_CreateSMContext Request includes an MN identifier being equal to MN#1.

In subsequent step S406, considering the possibility that another MN is to be added, and first expecting that the MN#1 is to configure all QoS flows, the SMF 30B transmits a PFCP (Packet Forwarding Control Protocol) session establishment request to the UPF 30C (refer to Non-Patent Document 8). The PFCP session establishment request includes a Create MAR IE. The Create MAR IE includes a 3GPP Access MN#1 Forwarding IE. It is to be noted that, in a case of the conventional ATSSS, the Create MAR IE includes a 3GPP Access Forwarding Action Information IE and a Non-3GPP Access Forwarding Action Information IE (refer to Non-Patent Document 8). In subsequent step S407, the UPF 30C transmits a PFCP session establishment response to the SMF 30B.

In subsequent step S408, the SMF 30B transmits Namf_Communication_N1N2MessageTransfer including a PDU Session Resource Setup Request Transfer IE to the AMF 30A (refer to Non-Patent Document 6). The PDU Session Resource Setup Request Transfer IE includes a multi-MN support indication and information indicating the QoS flow splitting by RAN. The Namf_Communication_N1N2MessageTransfer message includes an MN identifier being equal to MN#1. The SMF 30B also transmits a PDU session establishment accept (refer to Non-Patent Document 7) in the Namf_Communication_N1N2MessageTransfer message to the UE 20. The PDU session establishment accept includes an indication of a request for a PDU session branch configuration via another MN.

In subsequent step S409, the AMF 30A compares the MN identifier being equal to MN#1 received from the SMF 30B with each MN level terminal context that is locally stored. As a result of comparison, the AMF 30A recognizes that MN#1 corresponds to the RAN node 10A. In subsequent step S410, the AMF 30A transfers the PDU Session Resource Setup Request Transfer IE included in the received Namf_Communication_N1N2MessageTransfer message by using an N2PDU session request.

In subsequent step S411, the RAN node 10A detects that another RAN node #B is present near the UE 20, based on the measurement report that is obtained from the UE 20. In subsequent step S412, the RAN node 10A determines the QoS flow distribution or the QoS flow splitting between the node itself and the RAN node #B that is expected to be appropriate, by referring to the information from OAM (Operations administration and maintenance), or the like. The QoS flow distribution means allocating QoS flows to the node itself or to another RAN on a per-QoS flow basis. The QoS flow splitting means splitting one QoS flow into pieces, causing some pieces to be supported by the node itself, and causing remaining pieces to be supported by another RAN. It is to be noted that the RAN node 10A may follow the indication from the UE 20 and/or the UPF 30C with respect to the split ratio in a case of the QoS flow splitting. It is to be noted that the determination by the RAN node 10A in step S412 may be performed as in a case of DC except for following the indication from the UE 20 and/or the UPF 30C with respect to the split ratio of the QoS flow splitting.

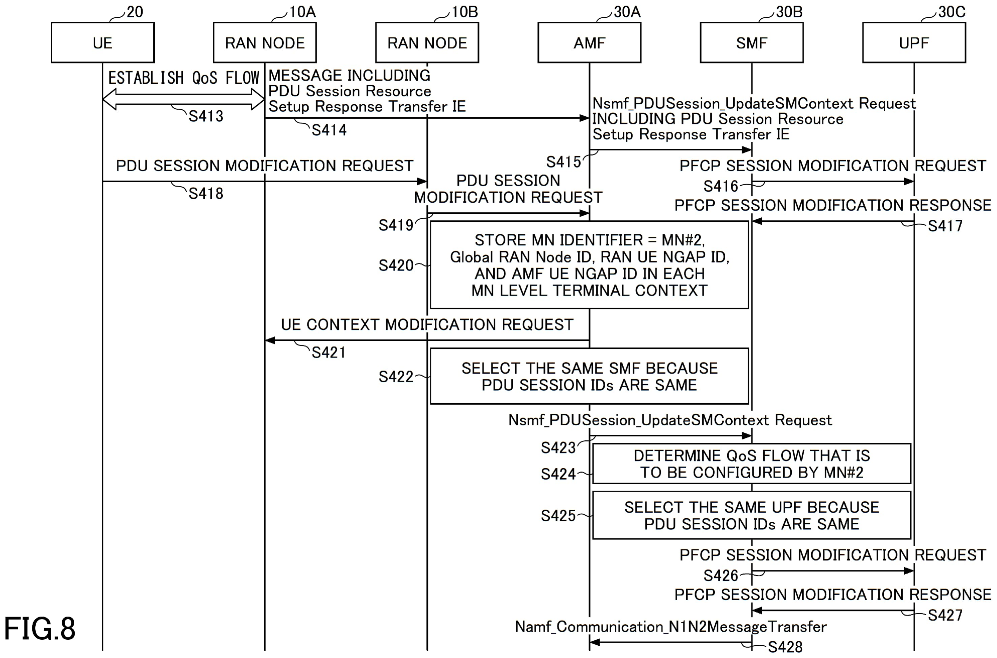

Fig. 8 is a sequence diagram for describing an example (2) of a PDU session establishment procedure in an embodiment of the present invention. In step S413, the RAN node 10A establishes the QoS flow with the UE 20, all or a part of the QoS flow being determined to be supported by the node itself (refer to Non-Patent Document 6). The RAN node 10A also transfers the PDU session establishment accept to the UE 20.

In subsequent step S414, the RAN node 10A transmits a message including a PDU Session Resource Setup Response Transfer IE (refer to Non-Patent Document 6) to the AMF 30A. A non-established QoS flow is configured to a QoS Flow Failed to Setup List IE included in the PDU Session Resource Setup Response Transfer IE, and a QoS flow subject to the QoS flow splitting is configured to a new IE, QoS Flow Partly Setup List IE. In the PDU Session Resource Setup Response Transfer IE, a traffic ratio for the RAN node 10A may be configured in addition to the IE, QoS Flow Partly Setup List IE.

In subsequent step S415, the AMF 30A transmits Nsmf_PDUSession_UpdateSMContext Request including the received PDU Session Resource Setup Response Transfer IE (refer to Non-Patent Document 6) to the SMF 30B. The Nsmf_PDUSession_UpdateSMContext Request message includes an MN identifier being equal to MN#1.

In subsequent step S416, in order to configure a QoS flow for MN#1, a QoS flow ratio for MN#1 based on the QoS Flow Partly Setup List IE indicating the QoS flow for MN#1 with respect to the splitting QoS flow, and an MN#1 side TEID (Tunnel Endpoint Identifier), the SMF 30B transmits a PFCP session modification request to the UPF 30C. The QoS flow ratio for MN#1 is configured in the Update 3GPP access MN#1 Forwarding Action Information IE included in the PFCP session modification request. In subsequent step S417, the UPF 30C transmits a PFCP session modification response to the SMF 30B.

After QoS flows are established in step S413, in step S418, the UE 20 transmits a PDU session modification request to the RAN node 10B. The UE 20 configures a PDU session ID that is the same as that of the PDU session establishment request in step S401 in the PDU session modification request. In subsequent step S419, the RAN node 10B checks the 5G-S-TMSI (Temporary Mobile Subscriber Identity) in the RRC message including the received PDU session modification request, and transfers the PDU session modification request to the same AMF 30A (refer to Non-Patent Document 6).

In subsequent step S420, the AMF 30A stores an MN identifier being equal to MN#2, a Global RAN Node ID of the RAN node 10B that has already been obtained in the NG SETUP procedure, a RAN UE NGAP ID that is obtained from the RAN node 10B, and an AMF UE NGAP ID that has already been assigned, or that will be assigned later, by the AMF 30A in each MN level terminal context.

In subsequent step S421, the AMF 30A transmits a UE context modification request to the RAN node 10A. The UE context modification request message includes a newly defined buddy RAN node IE. The buddy RAN node IE may be a Global RAN Node ID or a RAT type of the RAN node 10B.

In subsequent step S422, the AMF 30A selects the same SMF 30B because the PDU session ID of the received PDU session modification request is the same as that of the PDU session that has already been established. In subsequent step S423, the AMF 30A transmits Nsmf_PDUSession_UpdateSMContext Request including the received PDU session modification request (refer to Non-Patent Document 6) to the SMF 30B. The Nsmf_PDUSession_UpdateSMContext Request message includes an MN identifier being equal to MN#2.

In subsequent step S424, when the SMF 30B receives the Nsmf_PDUSession_UpdateSMContext Request message, the SMF 30B checks the QoS Flow Failed to Setup List IE and the QoS Flow Partly Setup List IE that are received in step S414 and determines a QoS flow that is required to be configured by MN#2.

In subsequent step S425, the SMF 30B selects the same UPF 30C because the PDU session ID of the PDU session modification request included in the Nsmf_PDUSession_UpdateSMContext Request message is the same as that of the PDU session that has already been established.

In subsequent step S426, the SMF 30B transmits a PFCP session modification request to the UPF 30C in order to configure the QoS flow that is required to be configured by MN#2. A traffic ratio for MN#2 that is derived from the traffic ratio for MN#1 described in the QoS Flow Partly Setup List IE is configured to the 3GPP Access MN#2 Forwarding Action Information IE in the Update MAR IE included in the PFCP session modification request (refer to Non-Patent Document 8). In subsequent step S427, the UPF 30C transmits a PFCP session modification response to the SMF 30B.

In subsequent step S428, the SMF 30B recognizes that the MNs are different, and transmits, to the AMF 30A, Namf_Communication_N1N2MessageTransfer including the PDU Session Resource Setup Request Transfer IE (refer to Non-Patent Document 3) with respect to the QoS flow that is required to be configured by MN#2. The PDU Session Resource Setup Request Transfer IE includes a multi-MN non-support indication. The Namf_Communication_N1N2MessageTransfer message includes an MN identifier being equal to MN#2. The SMF 30B also transmits a PDU session modification command in the Namf_Communication_N1N2MessageTransfer message to the UE 20. The PDU session modification command includes an ATSSS container IE. The SMF 30B configures QoS flow distribution and splitting information between MN#1 and MN#2 to the ATSSS container IE (refer to Non-Patent Document 9).

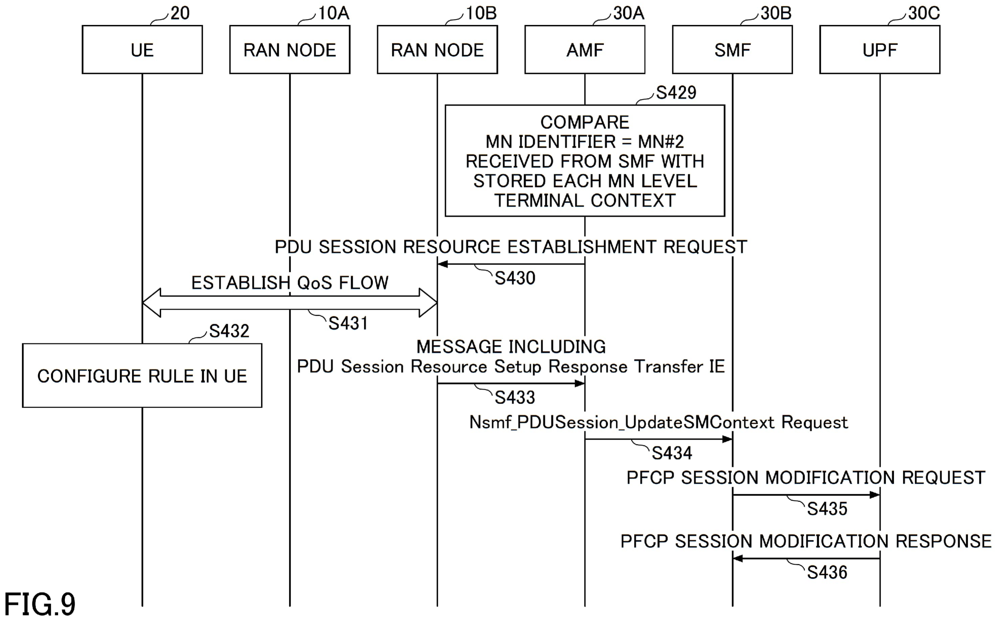

Fig. 9 is a sequence diagram for describing an example (3) of a PDU session establishment procedure in an embodiment of the present invention. In subsequent step S429, the AMF 30A compares the MN identifier being equal to MN#2 received from the SMF 30B with each MN level terminal context that is locally stored. As a result of comparison, the AMF 30A recognizes that MN#2 corresponds to the RAN node 10B. In subsequent step S430, the AMF 30A transfers the PDU session resource setup request including the received PDU Session Resource Setup Request Transfer IE and the PDU session modification command message. The PDU session resource setup request includes a newly defined buddy RAN node. The buddy RAN node IE may be a Global RAN Node ID or a RAT type of the RAN node 10A.

In subsequent step S431, the RAN node 10B establishes a QoS flow with the UE 20. The RAN node 10B also transfers the PDU session modification command to the UE 20 (refer to Non-Patent Document 6). In subsequent step S432, the QoS related rule in UE is configured by using the ATSSS container IE (refer to Non-Patent Document 6).

In subsequent step S433, the RAN node 10B transmits a message including a PDU Session Resource Setup Response Transfer IE (refer to Non-Patent Document 6) to the AMF 30A. In subsequent step S434, the AMF 30A transmits Nsmf_PDUSession_UpdateSMContext Request including the received PDU Session Resource Setup Response Transfer IE (refer to Non-Patent Document 6) to the SMF 30B. The Nsmf_PDUSession_UpdateSMContext Request message includes an MN identifier being equal to MN#2.

In subsequent step S435, the SMF 30B transmits a PFCP session modification request to the UPF 30C in order to configure the MN#2 side TEID. In subsequent step S436, the UPF 30C transmits a PFCP session modification response to the SMF 30B.

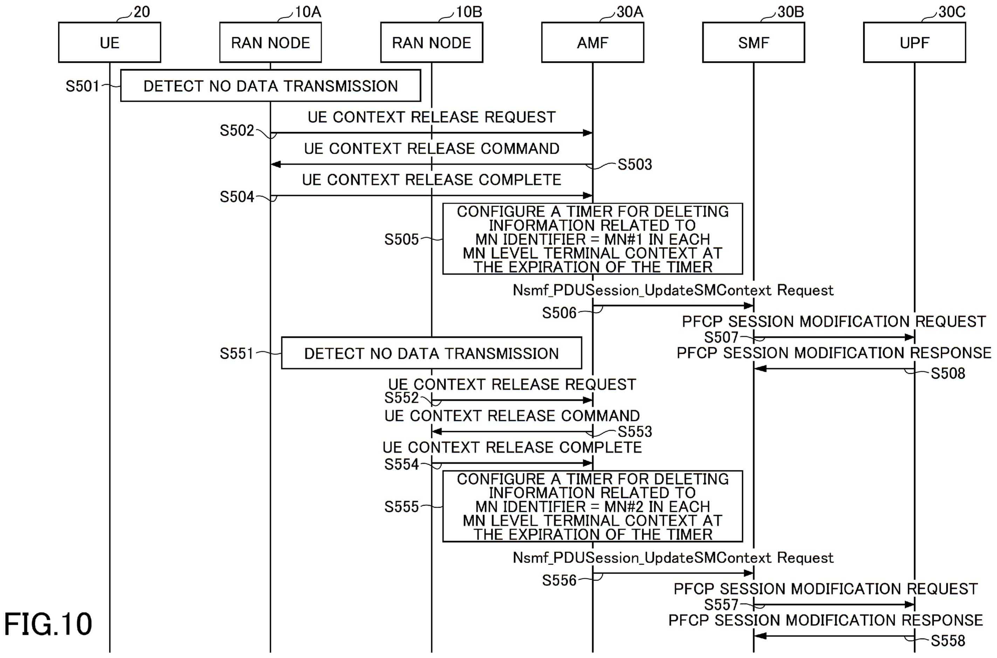

Fig. 10 is a sequence diagram for describing an example of PDU session deactivation in an embodiment of the present invention. In step S501, the RAN node 10A detects that there is no data transmission. In subsequent step S502, the RAN node 10A transmits a UE context release request (refer to Non-Patent Document 6). In subsequent step S503, the AMF 30A transmits a UE context release command to the RAN node 10A. In subsequent step S504, the RAN node 10A transmits a UE context release complete to the AMF 30A.

In subsequent step S505, the AMF 30A configures a timer that is used for deleting the information related to MN#1 in each MN level terminal context at the time of expiration of the timer. It is to be noted that the CM state with respect to MN#1 is changed to CM-IDLE in the AMF 30A after the expiration of the timer.

In subsequent step S506, the AMF 30A transmits Nsmf_PDUSession_UpdateSMContext Request to the SMF 30B. The Nsmf_PDUSession_UpdateSMContext Request message includes an MN identifier being equal to MN#1.

In subsequent step 507, the SMF 30B transmits a PFCP session modification request to the UPF 30C in order to release the MN#1 side TEID. In subsequent step S508, the UPF 30C transmits a PFCP session modification response to the SMF 30B.

In step S551, the RAN node 10B detects that there is no data transmission. In subsequent step S552, the RAN node 10B transmits a UE context release request (refer to Non-Patent Document 6). In subsequent step S553, the AMF 30A transmits a UE context release command to the RAN node 10B. In subsequent step S554, the RAN node 10B transmits a UE context release complete to the AMF 30B.

In subsequent step S555, the AMF 30A configures a timer that is used for deleting the information related to MN#2 in each MN level terminal context at the time of expiration of the timer. It is to be noted that the CM state with respect to MN#2 is changed to CM-IDLE and the UE-CM state with respect to the UE 20 is changed to UE-CM-IDLE in the AMF 30A after the expiration of the timer.

In subsequent step S556, the AMF 30A transmits Nsmf_PDUSession_UpdateSMContext Request to the SMF 30B. The Nsmf_PDUSession_UpdateSMContext Request message includes an MN identifier being equal to MN#2.

In subsequent step 557, the SMF 30B transmits a PFCP session modification request to the UPF 30C in order to release the MN#2 side TEID. In subsequent step S558, the UPF 30C transmits a PFCP session modification response to the SMF 30B.

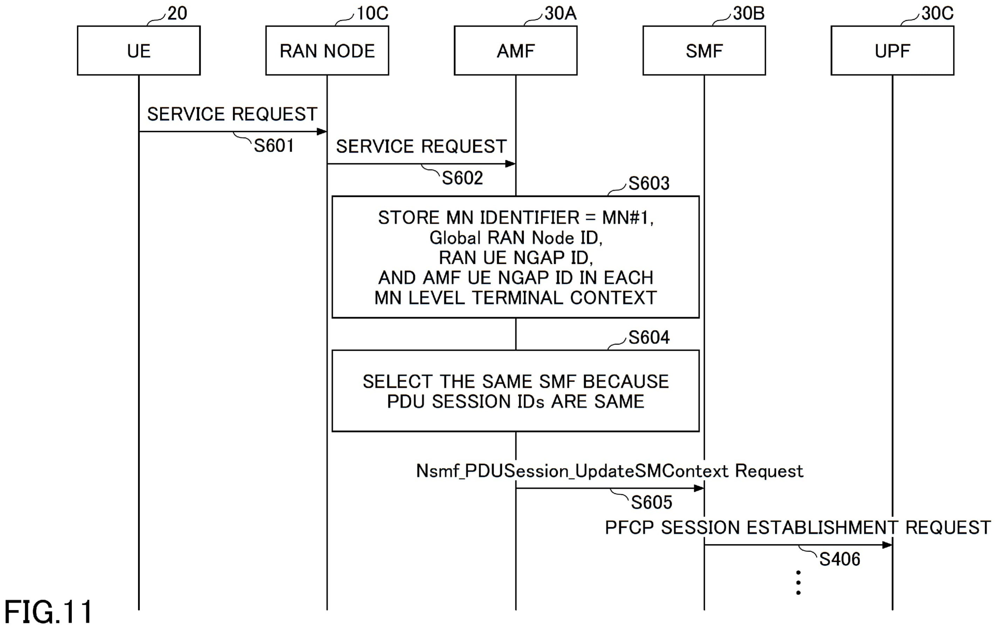

Fig. 11 is a sequence diagram for describing an example of a terminal initiated service request procedure in an embodiment of the present invention. In step S601, the UE 20 transmits a service request to the RAN node 10C (refer to Non-Patent Document 6). An Uplink data status IE is configured in the service request message with respect to the established PDU session ID (refer to Non-Patent Document 7).

In subsequent step S602, the RAN node 10C checks the 5G-S-TMSI in the RRC message including the service request and transfers the service request to the same AMF 30A. In subsequent step S603, the AMF 30A stores an MN identifier being equal to MN#1, a Global RAN Node ID of the RAN node 10C that has already been obtained in the NG SETUP procedure, a RAN UE NGAP ID that is obtained from the RAN node 10C, and an AMF UE NGAP ID that has already been assigned, or that will be assigned later, by the AMF.

In subsequent step S604, the AMF 30A selects the same SMF 30B because the PDU session ID is the same as that of the PDU session that has already been established. In subsequent step S605, the AMF 30A transmits Nsmf_PDUSession_UpdateSMContext Request to the SMF 30B. The Nsmf_PDUSession_UpdateSMContext Request message includes an MN identifier being equal to MN#1. Subsequently, step S406 and the subsequent steps in Fig. 7 are performed.

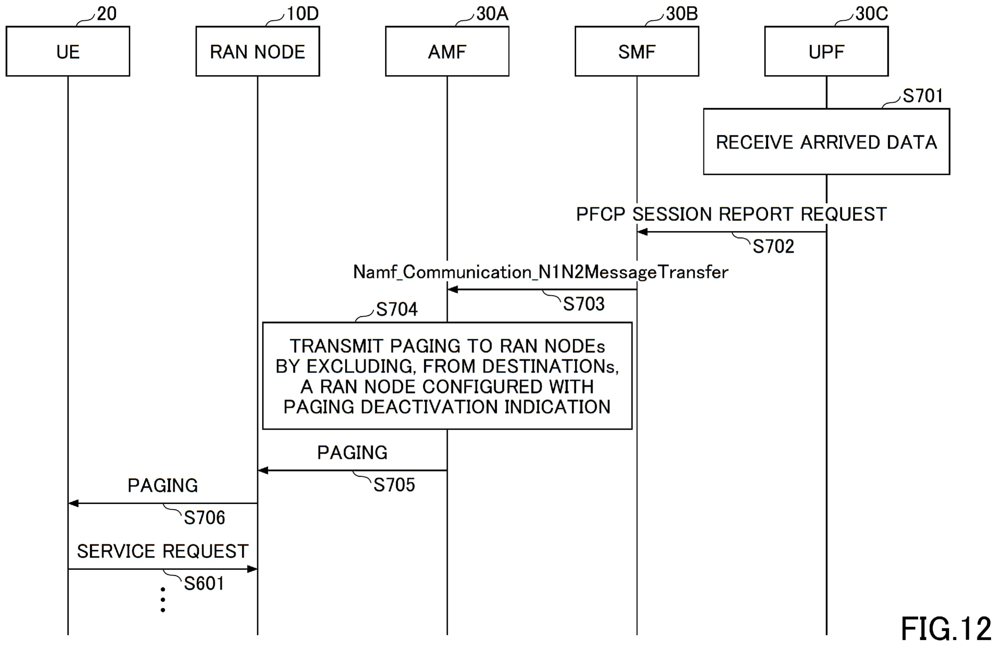

Fig. 12 is a sequence diagram for describing an example of a network initiated service request procedure in an embodiment of the present invention. In step S701, the UPF 30C receives the arrival data (refer to Non-Patent Document 6). In subsequent step S702, the UPF 30C transmits a PFCP session report request. In subsequent step S703, the SMF 30B transmits Namf_Communication_N1N2MessageTransfer to the AMF 30A (refer to Non-Patent Document 6).

In subsequent step S704, the AMF 30A excludes, from the destination, a RAN node for which a paging deactivation indication is configured by an NG SETUP request or by a RAN configuration update, and transmits paging to RAN nodes (refer to Non-Patent Document 6). Subsequently, step S601 and the subsequent steps in Fig. 11 are performed.

In addition, with respect to the handover procedure, the RAN node 10A may determine the handover destination by taking into account the measurement report, the RRM information, the buddy RAN node, and the RAN deployment information obtained from the OAM (refer to Non-Patent Document 10). A configuration can be configured in which one of the two MNs belongs to NG-RAN and the other belongs to the next generation RAN at the time of handover by taking into consideration the RAN type or RAT of the buddy RAN node. It is to be noted that the mechanism of enabling the above-described configuration at the time of cell selection may depend on the terminal implementation.

In addition, with respect to the AS (Access Stratum) security, the access type distinguishers used for deriving K_{gNB} (refer to Non-Patent Document 4) may be enhanced. For example, 3GPP access 0x01 may be used for MN#1 and the second 3GPP access 0x03 may be used for MN#2. According to the above-described operation, different keys may be used for protecting the confidentiality and the integrity between the terminal and MN1 and between the terminal and MN2, respectively.

In addition, with respect to the reachability management, the above-described UE-CM state may be used instead of the CM state.

In addition, with respect to the terminal location: ULI of MN#1; ULI of MN#2; or ULI of MN#1 and ULI of MN#2 may be used instead of ULI for each terminal.

According to an embodiment of the present invention, the dual MN using different RAT can be configured and the QoS flow distribution or splitting can be performed in the dual MN. In addition, a new CM state management can be applied to the dual MN. In addition, the RAN node paging deactivation indication can be deployed.

In other words, paging can be deactivated in the specific RAN (Radio Access Network) node.

### (Device configuration)

Next, a functional configuration example of the base station 10, network node 30 and the terminal 20 that perform processes and operations described above will be described. The base station 10, the network node 30 and the terminal 20 include functions for implementing the embodiments described above. It should be noted, however, that each of the base station 10, the network node 30 and the terminal 20 may include only some of the functions in the embodiments.

### <Base station 10 and network node 30>

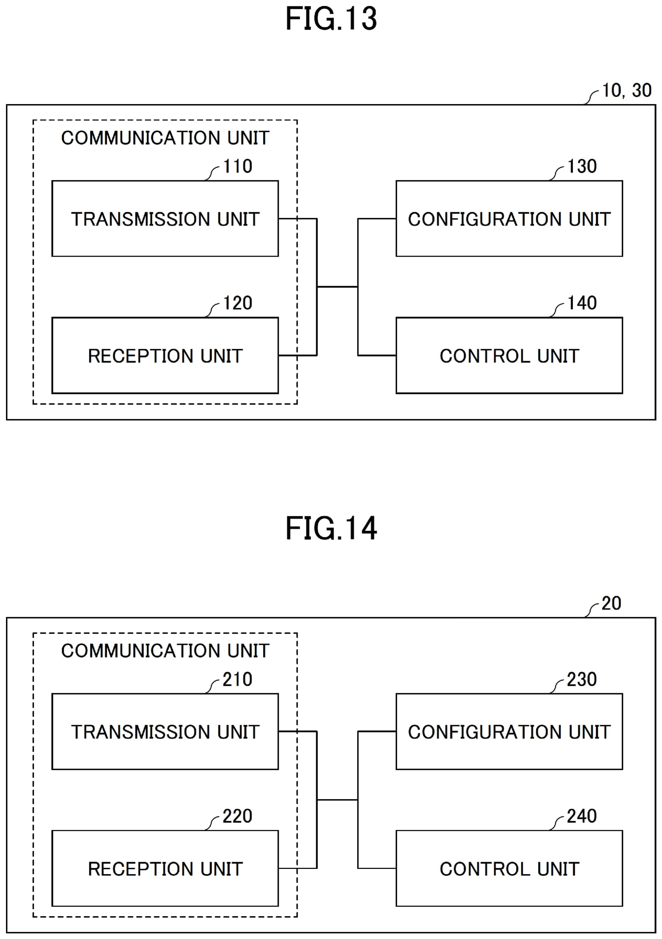

Fig. 13 is a drawing illustrating an example of a functional configuration of the base station 10 and the network node 30. As shown in Fig. 13, the base station 10 includes a transmission unit 110, a reception unit 120, a configuration unit 130, and a control unit 140. The functional configuration illustrated in Fig. 13 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals. A communication unit including the transmission unit 110 and the reception unit 120 may be configured.

The configuration unit 130 stores preset configuration information and various configuration information items to be transmitted to the terminal 20 in a storage apparatus and reads the preset configuration information from the storage apparatus as necessary. Contents of the configuration information are, for example, information related to the dual MN configuration.

The control unit 140 performs a process related to communications in the network as described in the embodiments. Further, the control unit 140 performs a process of communications using the dual MN configuration. Further, the control unit 140 performs a process related to communications with the terminal 20. The functional units related to signal transmission in the control unit 140 may be included in the transmission unit 110, and the functional units related to signal reception in the control unit 140 may be included in the reception unit 120.

### <Terminal 20>

Fig. 14 is a diagram illustrating an example of a functional configuration of the terminal 20. As shown in Fig. 14, the terminal 20 includes a transmission unit 210, a reception unit 220, a configuration unit 230, and a control unit 240. The functional configuration illustrated in Fig. 14 is merely an example. Functional divisions and names of functional units may be anything as long as operations according to an embodiment of the present invention can be performed. In addition, the communication apparatus that is a resource holder 20 may have a functional configuration similar to the terminal 20.

The transmission unit 210 generates a transmission signal from transmission data and transmits the transmission signal wirelessly. The reception unit 220 receives various signals wirelessly and obtains higher layer signals from the received physical layer signals. Further, the reception unit 220 has a function of receiving NR-PSS, NR-SSS, NR-PBCH, DL/UL control signals, or reference signals transmitted from the network node 30. A communication unit including the transmission unit 210 and the reception unit 220 may be configured.

The configuration unit 230 stores various types of configuration information received from the network node 30 by the reception unit 220 in the storage device and reads the configuration information from the storage device as necessary. In addition, the configuration unit 230 also stores pre-configured configuration information. Contents of the configuration information are, for example, information related to the dual MN configuration.

The control unit 240 performs a process related to communications in the network as described in the embodiments. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 13 and Fig. 14) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

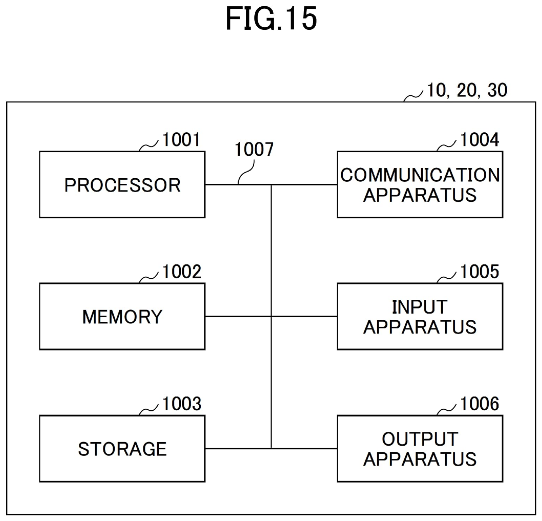

For example, the network node 30, terminal 20, etc., according to an embodiment of the present disclosure may function as a computer for processing the radio communication method of the present disclosure. Fig. 15 is a diagram to show an example of a hardware structure of the base station 10 and the terminal 20 according to one embodiment. The network node 30 may have the same hardware configuration as the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 13 may be implemented by control programs that are stored in the memory 1002 and that operate on the processor 1001. In addition, for example, the control unit 240 of the terminal 20 illustrated in Fig. 14 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

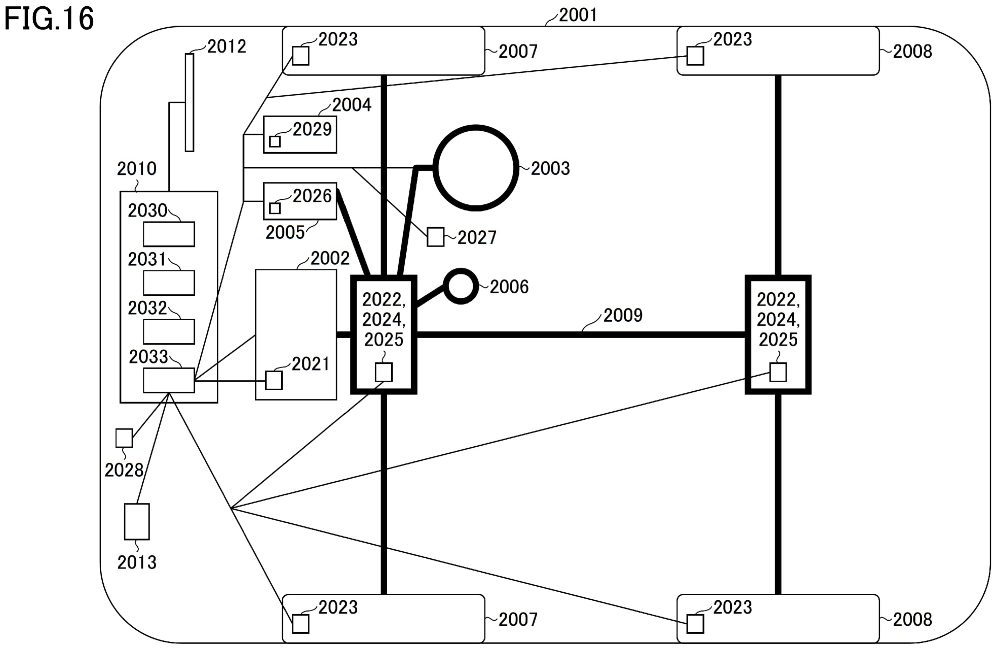

Fig. 16 shows an example of a configuration of a vehicle 2001. As shown in Fig. 16, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

According to the disclosed technique, a network node is provided. The network node includes: a transmission unit configured to transmit a configuration request including a paging deactivation indication to an AMF (Access and Mobility Management Function); and a reception unit configured to receive a response to the configuration request from the AMF. The transmission unit transmits broadcast information including a paging deactivation indication to a terminal.

According to the above-described configuration, A paging deactivation indication can be deployed for a RAN node. In other words, Paging can be deactivated in a specific RAN (Radio Access Network) node.

In addition, according to an embodiment of the present invention, a network node is provided. The network node includes: a reception unit configured to receive a configuration request including a paging deactivation indication from a RAN (Radio Access Network) node; and a transmission unit configured to transmit a response to the configuration request to the RAN node. The transmission unit does not transmit a paging to the RAN node.

According to the above-described configuration, a paging deactivation indication can be deployed for a RAN node. In other words, paging can be deactivated in a specific RAN (Radio Access Network) node.

In addition, according to an embodiment of the present invention, a terminal is provided. The terminal includes: a reception unit configured to receive broadcast information from a first RAN (Radio Access Network) node; and a control unit configured to select or reselect a cell, based on the broadcast information. The control unit does not select or reselect a cell of the first RAN node in a case where the broadcast information includes a paging deactivation indication.

According to the above-described configuration, a paging deactivation indication can be deployed for a RAN node. In other words, paging can be deactivated in a specific RAN (Radio Access Network) node.

The control unit may select or reselect a cell of the first RAN node in a case of camping on a cell of a second RAN node in which paging is activated. According to the above-described configuration, a paging deactivation indication can be deployed for a RAN node. In other words, paging can be deactivated in a specific RAN (Radio Access Network) node.

In addition, according to an embodiment of the present invention, a communication method performed by a network node is provided. The communication method includes: transmitting a configuration request including a paging deactivation indication to an AMF (Access and Mobility Management Function); receiving a response to the configuration request from the AMF; and transmitting broadcast information including a paging deactivation indication to a terminal.

According to the above-described configuration, a paging deactivation indication can be deployed for a RAN node. In other words, paging can be deactivated in a specific RAN (Radio Access Network) node.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information), upper layer signaling (e.g., RRC (Radio Resource Control) signaling, MAC (Medium Access Control) signaling), broadcast information (MIB (Master Information Block), SIB (System Information Block)), other signals, or a combination thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can support one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Network node
1001 Processor
1002 Memory
1003 Storage
1004 Communication apparatus
1005 Input apparatus
1006 Output apparatus

## Claims

1. A network node comprising:
a transmission unit configured to transmit a configuration request including a paging deactivation indication to an AMF (Access and Mobility Management Function); and
a reception unit configured to receive a response to the configuration request from the AMF, wherein
the transmission unit transmits broadcast information including a paging deactivation indication to a terminal.

2. A network node comprising:
a reception unit configured to receive a configuration request including a paging deactivation indication from a RAN (Radio Access Network) node; and
a transmission unit configured to transmit a response to the configuration request to the RAN node, wherein
the transmission unit does not transmit a paging to the RAN node.

3. A terminal comprising:
a reception unit configured to receive broadcast information from a first RAN (Radio Access Network) node; and
a control unit configured to select or reselect a cell, based on the broadcast information, wherein
the control unit does not select or reselect a cell of the first RAN node in a case where the broadcast information includes a paging deactivation indication.

4. The terminal as claimed in claim 3, wherein
the control unit selects or reselects a cell of the first RAN node in a case of camping on a cell of a second RAN node in which paging is activated.

5. A communication method performed by a network node, the communication method comprising:
transmitting a configuration request including a paging deactivation indication to an AMF (Access and Mobility Management Function);
receiving a response to the configuration request from the AMF; and
transmitting broadcast information including a paging deactivation indication to a terminal.
